# FASCICULE DE BREVET EUROPEEN

(11) **EP 3 740 666 B1**
(45) Date de publication et mention de la délivrance du brevet: **02.10.2024**
(21) Numéro de dépôt: 19704358.1
(22) Date de dépôt: 18.01.2019
(51) Int. Cl.: F02K 1/72, F02K 3/06

(54) **ENSEMBLE ARRIÈRE D'UNE NACELLE DE TURBORÉACTEUR D'AÉRONEF COMPRENANT UN INVERSEUR DE POUSSÉE À GRILLES COULISSANTES**
HINTERE BAUGRUPPE EINER TRIEBWERKSGONDEL EINES LUFTFAHRZEUGS MIT GLEITENDER KASKADENSCHUBUMKEHRVORRICHTUNG
REAR ASSEMBLY OF A NACELLE OF A TURBOJET ENGINE OF AN AIRCRAFT COMPRISING A SLIDING CASCADE THRUST REVERSER

(30) Priorité: 18.01.2018 FR 1850403
(43) Date de publication de la demande: 25.11.2020
(73) Titulaire: Safran Nacelles, 76700 Gonfreville-l'Orcher (FR)
(72) Inventeur: CARUEL, Pierre, 76700 GONFREVILLE L'ORCHER (FR); GRALL, Loïc, 76700 GONFREVILLE L'ORCHER (FR); HEAU, Alexis, 76700 GONFREVILLE L'ORCHER (FR); KERBLER, Olivier, 76700 GONFREVILLE L'ORCHER (FR); SERISET, Mélody, 76700 GONFREVILLE L'ORCHER (FR)
(74) Mandataire: Germain Maureau
(86) Numéro de dépôt international: PCT/FR2019/050105
(87) Numéro de publication internationale: WO 2019/141950

(56) Documents cités:
- FR-A1- 2 999 239
- US-A1- 2013 092 755
- US-A1- 2016 245 180
- US-A1- 2016 245 230

## Description

La présente invention se rapporte au domaine des nacelles pour moteurs d'aéronef et, plus précisément à un ensemble arrière d'une nacelle de turboréacteur d'aéronef qui comprend un inverseur de poussée à grilles coulissantes.

Un aéronef est généralement mû par plusieurs turboréacteurs logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un dispositif d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle.

Dans le cas d'un inverseur à grilles de déviation, la réorientation du flux d'air est effectuée par des grilles de déviation, associées à des volets d'inversion venant bloquer au moins partiellement la veine de circulation d'air, le capot n'ayant qu'une simple fonction de coulissement visant à découvrir ou recouvrir ces grilles de déviation.

On connaît des nacelles dites à structure en O, connues sous la terminologie anglo-saxonne « O-Duct », qui possèdent une structure aval présentant une structure unique sensiblement périphérique s'étendant depuis un côté du mât réacteur jusqu'à l'autre côté.

Il s'ensuit qu'une telle structure présente généralement un unique capot sensiblement périphérique qui, à fin de maintenance, s'ouvre par translation aval le long de l'axe longitudinal de la nacelle.

Pour une description détaillée, on pourra se reporter aux documents FR 2 911 372 et FR 2 952 681.

D'autres nacelles avec inverseur de poussée à grilles coulissantes selon l'art antérieur sont également connues des documents US2016/245230A1, FR2999239A1 et US2016245180A1.

Par ailleurs, les nacelles à structure en O comportent des grilles de déviation qui sont montées mobiles en translation et aptes à être rétractées au moins partiellement dans l'épaisseur de la section médiane de la nacelle et viennent ainsi chevaucher le carter de soufflante lorsque l'inverseur de poussée est inactif, en position de jet direct. En position d'inversion de poussée, les grilles de déviation sont déplacées avec le capot coulissant.

Chaque grille de déviation comprend une pluralité de rangs d'aubage qui s'étendent chacun autour de l'axe longitudinal de la nacelle et qui sont agencés longitudinalement depuis un premier rang d'aubage avant jusqu'à un dernier rang d'aubage arrière.

Chaque rang d'aubage comporte une pluralité d'aubes de déviation du flux d'air.

Lorsque l'inverseur de poussée occupe sa position de jet direct, une partie avant du capot coulissant est en appui longitudinal sur le bord de déviation du carter de soufflante par l'intermédiaire d'un joint d'étanchéité, pour empêcher l'air circulant dans la veine d'air froid de pénétrer dans la cavité qui loge les grilles de déviation.

Une perte d'étanchéité peut survenir par exemple lorsqu'un ou plusieurs secteurs du joint entre le bord de déviation et le capot arrière sont endommagés, une telle perte d'étanchéité peut former une poche de pression dans la cavité qui loge les grilles de déviation.

La poche de pression exerce une pression sur le capot coulissant, ce qui peut provoquer un recul du capot coulissant sensible vers l'arrière, depuis sa position de jet direct, en fonction de la souplesse du capot.

De même, le capot coulissant peut subir un recul intempestif lorsqu'un ou plusieurs verrous de maintien en position fermée du capot coulissant sont défaillants.

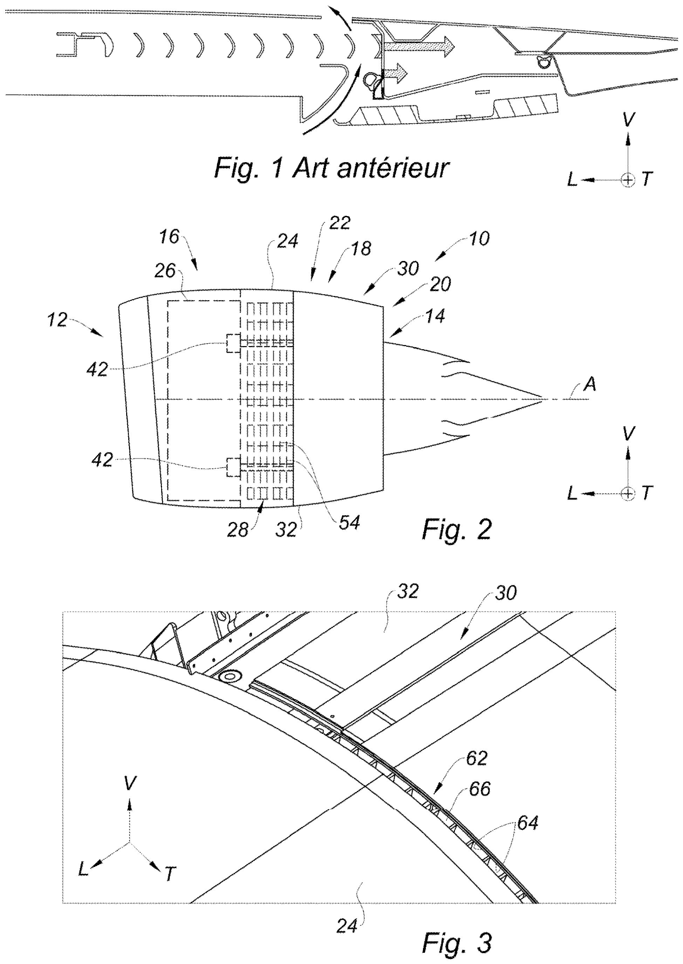

Comme on peut le voir à la figure 1 du présent document, en cas de recul du capot coulissant, de l'air s'engouffre dans la cavité puis sort vers l'extérieur par le jeu qui existe entre le capot de soufflante et le capot coulissant.

Cet air de fuite exerce sur les aubes des grilles de déviation un effort axial susceptible de provoquer un recul supplémentaire de l'ensemble formé par le capot coulissant et les grilles, et d'augmenter le débit d'air mentionné plus haut, et de conduire à des niveaux d'efforts non acceptables.

La présente invention vise donc à résoudre ce problème.

Ce qui aurait été naturel pour l'homme du métier, est d'avancer le cadre arrière de grilles, de manière à supprimer le premier aubage en partant de l'arrière. Mais une telle solution aurait pour effet de créer une poche de pression sous ce cadre arrière, laquelle poche exercerait un effort de poussée vers l'arrière sur le capot coulissant.

Pour résoudre ce problème, l'invention propose un ensemble arrière d'une nacelle de turboréacteur d'aéronef selon la revendication 1, l'ensemble arrière s'étendant suivant un axe central longitudinal et l'ensemble arrière comportant un inverseur de poussée à grilles coulissantes qui comprend au moins :
- un capot coulissant qui est monté mobile axialement en translation longitudinale d'avant en arrière, entre une position de fermeture dans laquelle le capot coulissant assure la continuité aérodynamique de la nacelle, et une position d'ouverture dans laquelle le capot coulissant ouvre un passage pour la redirection d'un flux d'air provenant d'une veine d'air froid de la nacelle, et
- une grille de déviation comprenant une pluralité de rangs d'aubage qui s'étendent chacun autour de l'axe central et qui sont agencés longitudinalement depuis un premier rang d'aubage avant jusqu'à un dernier rang d'aubage arrière, chaque rang d'aubage comportant au moins une aube de déviation du flux d'air vers l'extérieur de l'ensemble arrière de la nacelle, la grille de déviation étant solidaire en déplacement du capot coulissant,
caractérisé en ce que la grille de déviation comporte au moins un rang d'aubage neutre supplémentaire qui est interposé entre le dernier rang d'aubage et le capot coulissant et qui comporte au moins une aube neutre, le rang d'aubage neutre délimitant un passage de fuite vers l'extérieur de l'ensemble arrière de la nacelle qui est conçu pour que l'effort exercé sur ladite aube neutre par l'air à travers le passage de fuite soit dépourvu de composante axiale orientée vers l'arrière.

Ainsi, en cas de recul sensible du capot coulissant, l'ensemble arrière selon l'invention permet d'éviter l'apparition d'une poche d'air de surpression qui pousserait le capot coulissant vers l'arrière.

Aussi, le rang d'aubage neutre permet le passage d'un flux d'air de fuite sans que ce flux d'air de fuite participe à exercer un effort axial de recul sur l'ensemble formé par la grille de déviation et le capot coulissant.

Selon une autre caractéristique, le passage de fuite est adapté pour orienter l'air perpendiculairement à l'axe central de l'ensemble arrière de la nacelle, ou vers l'arrière.

Cette caractéristique vise à rendre nulle la composante axiale de l'effort appliqué sur la grille par le flux d'air de fuite, ou à rendre cette composante axiale positive de sorte que le flux d'air de fuite exerce un effort sur la grille qui tend à entraîner le capot mobile vers sa position de fermeture.

Selon une autre caractéristique, le passage de fuite est délimité par une première face arrière qui s'étend radialement et qui appartient à l'aube neutre et par une seconde face avant qui s'étend radialement et qui appartient à l'aube du dernier rang d'aubage.

Les faces, à savoir la première face arrière et la seconde face avant, délimitant le passage de fuite s'étendent avantageusement strictement radialement. En d'autres termes, ces faces sont rectilignes, c'est-à-dire qu'elles sont dépourvues d'obstacles pouvant perturber l'écoulement de l'air perpendiculairement à l'axe central de l'ensemble arrière de la nacelle, ou vers l'arrière.

Le caractère radial ou rectiligne desdites faces délimitant le passage de fuite est entendu comme des faces en ligne droite, contrairement à des faces courbées.

Bien entendu, le terme « radial » s'entend par rapport à l'axe central de l'ensemble arrière de la nacelle.

Selon une autre caractéristique, le capot coulissant comporte un débord avant qui s'étend longitudinalement de façon à chapeauter radialement, au moins en partie, le passage de fuite.

Selon une autre caractéristique, le capot coulissant porte des volets qui sont montés pivotant dans la veine d'air froid, entre une position de repos et une position d'inversion de poussée qui correspond à la position d'ouverture du capot coulissant, les volets étant conçus pour diriger le flux d'air vers les rangs d'aubage, depuis le premier rang d'aubage avant jusqu'au dernier rang d'aubage arrière et pour limiter le débit du flux d'air qui passe par le rang d'aubage neutre 62, lorsque les volets 46 sont en position d'inversion de poussée.

L'invention concerne également une nacelle de turboréacteur d'aéronef comportant un ensemble arrière selon l'une quelconque des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en section longitudinale qui illustre une grille de déviation d'un inverseur de poussée selon l'art antérieur ;
- la figure 2 est une vue d'ensemble schématique qui illustre une nacelle de turboréacteur comprenant un ensemble arrière de nacelle équipée d'un inverseur de poussée qui comporte un capot coulissant sensiblement reculé, selon l'invention ;
- la figure 3 est une vue de détail en perspective qui illustre un jeu pour le passage d'une fuite d'air à travers les grilles de l'inverseur de poussée de la figure 2 ;
- la figure 4 est une vue en section longitudinale qui illustre le capot coulissant en position de jet direct, et une grille de déviation à aubage neutre, selon l'invention ;
- la figure 5 est une vue en section longitudinale qui illustre le capot coulissant de la figure 4 en position sensiblement reculé ;
- la figure 6 est une vue en section longitudinale qui illustre le capot coulissant de la figure 4 en position d'inversion de poussée.

Dans la description et les revendications, on adoptera à titre non limitatif la terminologie longitudinal, vertical et transversal en référence au trièdre L, V, T indiqué aux figures, dont l'axe L est parallèle à l'axe A central de la nacelle.

On utilisera également les termes « axial » et « radial » en référence à l'axe A central longitudinal de la nacelle, le terme « radial » désignant une direction perpendiculaire à l'axe A central de la nacelle.

Sur l'ensemble de ces figures, des références identiques ou analogues représentent des organes ou ensembles d'organes identiques ou analogues.

A noter que dans la présente demande de brevet, les termes « amont » et « aval » doivent s'entendre par rapport à la circulation du flux d'air à l'intérieur de l'ensemble propulsif formé par la nacelle et le turboréacteur, c'est-à-dire de la gauche vers la droite sur la figure 2.

Dans la présente demande, les termes « supérieur », « inférieur » et leurs dérivés font référence à la position ou à l'orientation d'un élément ou d'un composant, cette position ou cette orientation étant considérée lorsque la nacelle est en configuration de service sur un aéronef au sol.

On a représenté à la figure 2 une nacelle 10 de turboréacteur qui présente une structure sensiblement tubulaire autour d'un axe A central longitudinal.

La nacelle 10 comprend une entrée d'air 12 en amont du turboréacteur 14, une section médiane 16 destinée à entourer une soufflante du turboréacteur, un ensemble arrière 18 destiné à entourer la chambre de combustion du turboréacteur 14, la nacelle 10 étant terminée par une tuyère d'éjection 20 dont la sortie est située en aval du turboréacteur 14.

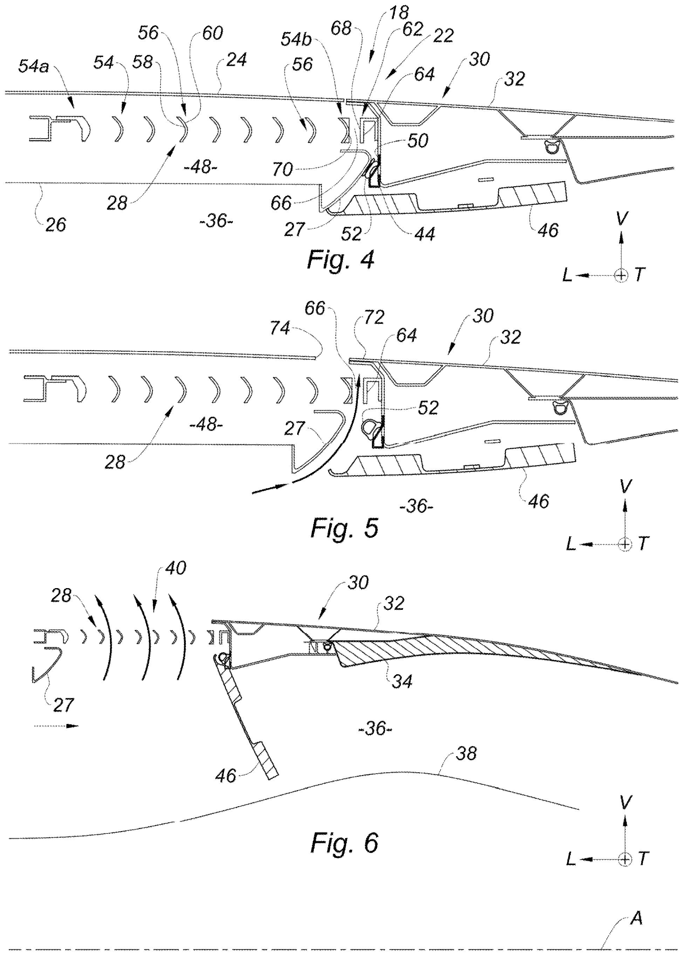

La section médiane 16 comporte un capot de soufflante 24 externe et un carter de soufflante 26 qui délimite un bord de déviation 27visible sur les figures 4 à 6.

L'ensemble arrière 18 de la nacelle 10 comporte un inverseur de poussée 22 qui supporte des grilles 28 de déviation.

L'inverseur de poussée 22 comporte un capot coulissant 30 d'inversion de poussée qui présente une forme globalement cylindrique autour de l'axe A de la nacelle 10.

Comme on peut le voir à la figure 6, le capot coulissant 30 comprend un capot externe 32, et une paroi interne 34 qui délimite une veine d'air froid 36 avec une structure interne 38 qui entoure le turboréacteur 14.

Le capot coulissant 30 d'inversion de poussée est monté mobile axialement en translation longitudinale d'avant en arrière, entre une position de fermeture illustrée aux figures 2 et 4, dans laquelle le capot coulissant 30 assure la continuité aérodynamique de la nacelle 10, et une position d'ouverture illustrée à la figure 6, dans laquelle le capot coulissant 30 ouvre un passage 40 pour la redirection d'un flux d'air provenant de la veine d'air froid 36 de la nacelle 10.

A cet effet, comme on peut le voir à la figure 2, l'inverseur de poussée 22 comporte des vérins 42, qui sont conçus pour entraîner l'ensemble formé par les grilles 28 et le capot coulissant 30 d'inversion de poussée en coulissement entre sa position d'ouverture et sa position de fermeture.

Aussi, les grilles 28 sont solidaires d'un cadre arrière 44 qui est relié sur le capot coulissant 30, de sorte que les grilles 28 sont entraînées en coulissement avec le capot coulissant 30 par les vérins 42.

Le capot coulissant 30 porte des volets 46 qui sont montés pivotant dans la veine d'air froid 36, entre une position de repos illustrée aux figures 4 et 5, qui correspond à la position de fermeture de jet direct du capot coulissant 30, et une position d'inversion de poussée illustrée à la figure 6, qui correspond à la position d'ouverture d'inversion de poussée du capot coulissant 30, dans laquelle les volets 46 dirigent le flux d'air vers les grilles 28 comme illustré par les flèches à la figure 6.

En référence à la figure 4, on notera que lorsque la capot coulissant 30 occupe sa position de fermeture, les grilles 28 sont logées dans une cavité 48 qui est délimitée radialement par le capot de soufflante 24 externe et le carter de soufflante 26.

De plus, une partie avant 50 du capot coulissant 30 est en appui longitudinal sur le bord de déviation 27 du carter de soufflante 26 par l'intermédiaire d'un joint d'étanchéité 52, pour empêcher l'air circulant dans la veine d'air froid 36 de pénétrer dans la cavité 48 qui loge les grilles 28 de déviation.

Les grilles 28 de déviation comprennent chacune une pluralité de rangs d'aubage 54 qui s'étendent chacun de façon circulaire autour de l'axe A central et qui sont agencés longitudinalement de façon régulière depuis un premier rang d'aubage 54a avant jusqu'à un dernier rang d'aubage 54b arrière.

Chaque rang d'aubage 54 comporte une pluralité d'aubes 56 qui sont adaptées chacune pour dévier le flux d'air provenant de la veine d'air froid 36 vers l'avant, à l'extérieur la nacelle 10, de façon à exercer une contre-poussée.

Comme on peut le voir à la figure 4, les aubes 56 des rangs d'aubage 54 présentent une forme incurvée et sont délimitées chacune par une face avant 58 concave et par une face arrière 60 convexe, pour orienter le flux d'air vers l'avant.

Conformément à l'invention, la grille 28 comporte un rang d'aubage neutre 62 supplémentaire qui est interposé longitudinalement entre le dernier rang d'aubage 54b et le capot coulissant 30.

Le rang d'aubage neutre 62 s'étend de façon circulaire autour de l'axe A central et il comporte une pluralité d'aubes neutres 64.

De plus, le rang d'aubage neutre 62 délimite un passage de fuite 66 vers l'extérieur de l'ensemble arrière 18 de la nacelle 10, le passage de fuite 66 étant conçu pour que l'effort exercé sur chaque aube neutre 64 par l'air de fuite à travers le passage de fuite 66 soit dépourvu de composante axiale orientée vers l'arrière.

Selon le mode de réalisation décrit ici, le passage de fuite 66 est adapté pour orienter l'air de fuite radialement, c'est-à-dire perpendiculairement à l'axe A central de l'ensemble arrière 18 de la nacelle 10.

A cet effet, le passage de fuite 66 est délimité par une première face arrière 68 qui s'étend radialement et qui appartient à l'aube neutre 64 et par une seconde face avant 70 qui s'étend radialement et qui appartient à l'aube 56 du dernier rang d'aubage 54b.

Ainsi, lorsque le capot coulissant 30 adopte une position sensiblement reculée illustrée aux figures 3 et 5, par exemple en cas de défaut des verrous de maintien en position fermée du capot coulissant 30, un flux d'air de fuite s'écoule depuis la veine d'air frais 36, en passant successivement entre le bord de déviation 27 et la partie avant 50 du capot coulissant 30, puis à travers le passage de fuite 66. Dans cette configuration, le flux d'air de fuite n'exerce pas d'effort axial vers l'arrière de part son orientation strictement radiale.

Selon un autre aspect de l'invention illustré à la figure 5, le capot coulissant 30 comporte un débord avant 72 qui s'étend longitudinalement de façon à chapeauter radialement le passage de fuite 66 et l'aube neutre 64.

Le débord avant 72 est agencé en vis-à-vis d'un bord d'extrémité arrière 74 du capot de soufflante 24, de façon à assurer la continuité aérodynamique de la nacelle 10 en configuration capot coulissant 30 fermé.

La présente description de l'invention est donnée à titre d'exemple non limitatif.

On comprendra notamment que le passage de fuite 66 peut être adapté pour orienter l'air de fuite sensiblement vers l'arrière, le passage de fuite 66 étant alors conçu pour que l'effort exercé sur chaque aube neutre 64 par l'air de fuite à travers le passage de fuite 66 présente une composante axiale orientée vers l'avant qui tend à fermer le capot coulissant 30.

Dans ce type de configuration dans laquelle le passage de fuite 66 oriente l'air de fuite sensiblement vers l'arrière, les volets 46 sont conçus pour diriger le flux d'air vers les rangs d'aubage 54 qui réorientent le flux d'air vers l'avant, pour limiter le débit du flux d'air qui passe par le rang d'aubage neutre 62, lorsque les volets 46 sont en position d'inversion de poussée, comme on peut le voir à la figure 6.

A cet effet, le bord d'attaque de chaque volet 46, qui est agencé au voisinage du point de pivot du volet 46 associé, est agencé sensiblement au niveau du dernier rang d'aubage 54b suivant une direction longitudinale.

## Revendications

1. Ensemble arrière (18) d'une nacelle (10) de turboréacteur d'aéronef, l'ensemble arrière (18) s'étendant suivant un axe (A) central longitudinal et l'ensemble arrière (18) comportant un inverseur de poussée (22) à grilles (28) coulissantes qui comprend au moins :
- un capot coulissant (30) qui est monté mobile axialement en translation longitudinale d'avant en arrière, entre une position de fermeture dans laquelle le capot coulissant (30) assure la continuité aérodynamique de la nacelle (10), et une position d'ouverture dans laquelle le capot coulissant (30) ouvre un passage pour la redirection d'un flux d'air provenant d'une veine d'air froid (36) de la nacelle (10), et
- une grille (28) de déviation comprenant une pluralité de rangs d'aubage (54) qui s'étendent chacun autour de l'axe (A) central et qui sont agencés longitudinalement depuis un premier rang d'aubage (54a) avant jusqu'à un dernier rang d'aubage (54b) arrière, chaque rang d'aubage comportant au moins une aube de déviation (56) du flux d'air vers l'extérieur de l'ensemble arrière (18) de la nacelle (10), la grille (28) de déviation étant solidaire en déplacement du capot coulissant (30),
**caractérisé en ce que** la grille (28) de déviation comporte au moins un rang d'aubage neutre (62) supplémentaire qui est interposé entre le dernier rang d'aubage (54b) et le capot coulissant (30) et qui comporte au moins une aube neutre (64), le rang d'aubage neutre (62) délimitant un passage de fuite (66) vers l'extérieur de l'ensemble arrière (18) de la nacelle (10) qui est conçu pour que l'effort exercé sur ladite aube neutre (64) par l'air à travers le passage de fuite (66) soit dépourvu de composante axiale orientée vers l'arrière,
et **en ce que** le passage de fuite (66) est délimité par une première face arrière (68) qui s'étend radialement et qui appartient à l'aube neutre (64) et par une seconde face avant (70) qui s'étend radialement et qui appartient à l'aube (56) du dernier rang d'aubage (54b),
la première face arrière (68) et la seconde face avant (70) délimitant le passage de fuite (66) s'étendent strictement radialement.

2. Ensemble arrière (18) d'une nacelle (10) selon la revendication 1, **caractérisé en ce que** le passage de fuite (66) est adapté pour orienter l'air perpendiculairement à l'axe (A) central de l'ensemble arrière (18) de la nacelle (10), ou vers l'arrière.

3. Ensemble arrière (18) d'une nacelle (10) selon l'une quelconque des revendications précédentes, **caractérisé en ce que** le capot coulissant (30) comporte un débord (72) avant qui s'étend longitudinalement de façon à chapeauter radialement, au moins en partie, le passage de fuite (66).

4. Ensemble arrière (18) d'une nacelle (10) selon l'une quelconque des revendications précédentes, **caractérisé en ce que** le capot coulissant (30) porte des volets (46) qui sont montés pivotant dans la veine d'air froid (36), entre une position de repos et une position d'inversion de poussée qui correspond à la position d'ouverture du capot coulissant (30), les volets (46) étant conçus pour diriger le flux d'air vers les rangs d'aubage (54), depuis le premier rang d'aubage (54a) avant jusqu'au dernier rang d'aubage (54b) arrière et pour limiter le débit du flux d'air qui passe par le rang d'aubage neutre (62), lorsque les volets (46) sont en position d'inversion de poussée.

5. Nacelle (10) de turboréacteur d'aéronef comportant un ensemble arrière (18) selon l'une quelconque des revendications précédentes.

## Patentansprüche

1. Heckbaugruppe (18) einer Gondel (10) eines Flugzeug-Turbostrahltriebwerks, wobei sich die Heckbaugruppe (18) entlang einer zentralen Längsachse (A) erstreckt und die Heckbaugruppe (18) einen Schubumkehrer (22) mit verschiebbaren Gittern (28) umfasst, der mindestens Folgendes umfasst:
- eine verschiebbare Abdeckung (30), die axial in Längsrichtung verschieblich von vorne nach hinten zwischen einer Schließposition, in der die verschiebbare Abdeckung (30) für die aerodynamische Kontinuität der Gondel (10) sorgt, und einer Öffnungsposition, in der die verschiebbare Abdeckung (30) einen Kanal für eine Umleitung eines von einem Kaltluftströmungspfad (36) der Gondel (10) ankommenden Luftstroms öffnet, beweglich montiert ist, und
- eine Ablenkgitter (28), das eine Vielzahl von Schaufelreihen (54) umfasst, die sich jeweils um die zentrale Achse (A) erstrecken und in Längsrichtung von einer ersten vorderen Schaufelreihe (54a) bis zu einer letzten hinteren Schaufelreihe (54b) angeordnet sind, wobei jede Schaufelreihe mindestens eine Ablenkschaufel (56) für den Luftstrom zur Außenseite der Heckbaugruppe (18) der Gondel (10) hin umfasst, wobei das Ablenkgitter (28) verschiebbar an der verschiebbaren Abdeckung (30) befestigt ist,
**dadurch gekennzeichnet, dass** das Ablenkgitter (28) mindestens eine zusätzliche neutrale Schaufelreihe (62) umfasst, die zwischen der letzten Schaufelreihe (54b) und der verschiebbaren Abdeckung (30) eingefügt ist, und mindestens eine neutrale Schaufel (64) umfasst, wobei die neutrale Schaufelreihe (62) einen Leckagedurchtritt (66) zur Außenseite der Heckbaugruppe (18) der Gondel (10) hin begrenzt, der so ausgebildet ist, dass die Kraft, die von der Luft durch den Leckagedurchtritt (66) auf die neutrale Schaufel (64) ausgeübt wird, keine nach hinten gerichtete axiale Komponente aufweist,
und dass der Leckagedurchtritt (66) durch eine erste hintere Fläche (68), die sich radial erstreckt und zur neutralen Schaufel (64) gehört, und durch eine zweite vordere Fläche (70) begrenzt wird, die sich radial erstreckt und zur Schaufel (56) der letzten Schaufelreihe (54b) gehört,
wobei die erste hintere Fläche (68) und die zweite vordere Fläche (70) den Leckagedurchtritt (66) begrenzen und sich strikt radial erstrecken.

2. Heckbaugruppe (18) einer Gondel (10) nach Anspruch 1, **dadurch gekennzeichnet, dass** der Leckagedurchtritt (66) dazu ausgelegt ist, die Luft senkrecht zur zentralen Achse (A) der Heckbaugruppe (18) der Gondel (10) oder zur Außenseite zu leiten.

3. Heckbaugruppe (18) einer Gondel (10) nach einem der vorhergehenden Ansprüche, **dadurch gekennzeichnet, dass** die verschiebbare Abdeckung (30) einen vorderen Überstand (72) umfasst, der sich in Längsrichtung erstreckt, um den Leckagedurchtritt (66) mindestens teilweise radial zu kontrollieren.

4. Heckbaugruppe (18) einer Gondel (10) nach einem der vorhergehenden Ansprüche, **dadurch gekennzeichnet, dass** die verschiebbare Abdeckung (30) Klappen (46) trägt, die schwenkbar im Kaltluftströmungspfad (36) zwischen einer Ruheposition und einer Schubumkehrposition, die der Öffnungsposition der verschiebbaren Abdeckung (30) entspricht, montiert sind, wobei die Klappen (46) so ausgebildet sind, dass sie den Luftstrom zu den Schaufelreihen (54) hin, von der ersten vorderen Schaufelreihe (54a) bis zur letzten hinteren Schaufelreihe (54b), leitet und die Durchflussraste des Luftstroms begrenzt, der durch die neutrale Schaufelreihe (62) strömt, wenn sich die Klappen (46) in der Schubumkehrposition befinden.

5. Gondel (10) eines Flugzeug-Turbostrahltriebwerks, die eine Heckbaugruppe (18) nach einem der vorhergehenden Ansprüche umfasst.

## Claims

1. A rear assembly (18) of an aircraft turbojet engine nacelle (10), the rear assembly (18) extending along a longitudinal central axis (A) and the rear assembly (18) including a thrust reverser (22) with sliding cascades (28) which comprises at least:
- a sliding cowl (30) which is axially mounted movable in longitudinal translation from front to back, between a closing position in which the sliding cowl (30) ensures the aerodynamic continuity of the nacelle (10), and an opening position in which the sliding cowl (30) opens a passage for the redirection of an air flow coming from a cold air flow path (36) of the nacelle (10), and
- a cascade vane (28) comprising a plurality of blading rows (54) which each extend about the central axis (A) and which are arranged longitudinally from a first front blading row (54a) to a last rear blading row (54b), each blading row including at least one deflection blade (56) of the air flow towards the outside of the rear assembly (18) of the nacelle (10), the cascade vane (28) being secured in displacement to the sliding cowl (30),
**characterized in that** the cascade vane (28) includes at least one additional neutral blading row (62) which is interposed between the last blading row (54b) and the sliding cowl (30) and which includes at least one neutral blade (64), the neutral blading row (62) delimiting a leakage passage (66) towards the outside of the rear assembly (18) of the nacelle (10) which is designed so that the force exerted on said neutral blade (64) by the air through the leakage passage (66) is devoid of an axial component oriented backwards,
and **in that** the leakage passage (66) is delimited by a first rear face (68) which extends radially and which belongs to the neutral blade (64) and by a second front face (70) which extends radially and which belongs to the blade (56) of the last blading row (54b),
the first rear face (68) and the second front face (70) delimiting the leakage passage (66) extending strictly radially.

2. The rear assembly (18) of a nacelle (10) according to claim 1, **characterized in that** the leakage passage (66) is adapted to orient the air perpendicular to the central axis (A) of the rear assembly (18) of the nacelle (10), or backwards.

3. The rear assembly (18) of a nacelle (10) according to any one of the preceding claims, **characterized in that** the sliding cowl (30) includes a front overhang (72) which extends longitudinally so as to radially cap, at least in part, the leakage passage (66).

4. The rear assembly (18) of a nacelle (10) according to any one of the preceding claims, **characterized in that** the sliding cowl (30) carries flaps (46) which are pivotally mounted in the cold air flow path (36), between a rest position and a thrust reversal position which corresponds to the opening position of the sliding cowl (30), the flaps (46) being designed to direct the air flow towards the blading rows (54), from the first front blading row (54a) to the last rear blading row (54b) and to limit the flow rate of air flow which passes through the neutral blading row (62), when the flaps (46) are in the thrust reversal position.

5. A nacelle (10) of an aircraft turbojet engine including a rear assembly (18) according to any one of the preceding claims.
